# EUROPEAN PATENT APPLICATION

(11) **EP 2 434 314 A1**
(43) Date of publication of application: **28.03.2012**
(21) Application number: 10777690.8
(22) Date of filing: 12.05.2010
(51) Int. Cl.: G02B 1/10, B32B 9/00, G02B 1/11, G02C 7/02

(54) **OPTICAL PRODUCT AND PLASTIC LENS FOR EYEGLASS**

(30) Priority: 20.05.2009 JP 2009122216
(71) Applicant: Tokai Optical Co., Ltd., Aichi 444-2192 (JP)
(72) Inventor: FUKAGAWA Tsuyoshi, Okazaki-shi Aichi 444-2192 (JP); TAKAHASHI Hirotoshi, Okazaki-shi Aichi 444-2192 (JP)
(74) Representative: Prüfer & Partner GbR European Patent Attorneys
(86) International application number: PCT/JP2010/058046
(87) International publication number: WO 2010/134457

(57) **Abstract**

[TASK] To provide an optical product provided with an excellent antistatic property without affecting its light transmitting property.

[MEANS OF SOLVING THE PROBLEM] An antistatic optical lens is provided in which a carbon nanotube deposition layer 2 is stacked on both front and back surfaces of a lens base 1 in the optical lens as an optical product, and the amount of carbon nanotubes per unit area in each surface is from 9.93E-10 g/ mm² to 3.97E-09 g/ mm² A spectacle plastic lens as an optical product is also provided in which a hard coat layer (an intermediate layer 3) and an antireflection film (an optical multilayer film 4) are stacked on the carbon nanotube deposition layer 2.

## Description

### TECHNICAL FIELD

The present invention relates to optical products such as spectacle lenses and camera lenses, and spectacle plastic lenses, which are provided with an excellent antistatic property without affecting their light transmitting property.

### BACKGROUND ART

Optical lenses as an example of optical products tend to attract dirt or dust when electrostatically charged, and especially spectacle lenses need be wiped more frequently. If the lens with dirt or dust adhering thereon is wiped, etc., the dirt or dust caught by a wiper scratches the lens surface. In other optical lenses, adhesion of dirt, dust, etc. may affect an image output, etc. A commonly known method to provide an optical lens with an antistatic property is to provide a conductive coating layer on the optical lens. However, this method has problems such as coloring due to absorption of visible light, durability performance, etc.

One known method to solve these problems is to stack carbon nanotubes. For example, stacking carbon nanotubes by a method described in Patent Document 1 can provide an optical member provided with an excellent antistatic property without affecting its light transmitting property, while maintaining a conventional level of durability. Other known methods include stacking a thin film by a vacuum deposition method by using a water repellent containing carbon nanotubes, etc. (Patent Document 2).

However, an optical member disclosed in Patent Document 1 has an antistatic effect, but has a problem with sustainability of the antistatic property due to weak fixing power of the carbon nanotubes. In the method disclosed in Patent Document 2, it is difficult to control the carbon nanotubes to be uniformly contained in the stacked film.

Carbon nanotubes are a fibrous material, and voids are highly likely to be formed between the carbon nanotubes. It is therefore difficult to physically measure a film thickness. Thus, there is a problem with controllability of a carbon nanotube deposition layer. A manufacturing method disclosed in Patent Document 3 does not mention the amount and proportion of carbon nanotubes contained in a carbon nanotube deposition layer. Patent Document 4 mentions the aperture ratio of carbon nanotubes, but has a problem with simplicity of work as advanced analysis is required.

### Related Art Documents

### Patent Documents

Patent Document 1: Japanese Patent Application Publication No. JP-A-2009-92949
Patent Document 2: Japanese Patent Application Publication No. JP-A-2007-056314
Patent Document 3: Japanese Patent Application Publication No. JP-A-2006-119351
Patent Document 4: Japanese Patent Application Publication No. JP-A-2008-224971

### SUMMARY OF INVENTION

### Technical Problem

The present invention was developed to solve the above problems, and it is an object of the present invention to provide an optical product and a spectacle plastic lens provided with an excellent antistatic property without affecting their light transmitting property.

### Solution to Problem

In order to solve the above problems, the inventors have found through intensive studies that an optical product having an excellent antistatic property as described below can solve the problems, and thus have completed the present invention.

That is, the invention according to claim 1 is directed to an optical product **characterized in that** a carbon nanotube deposition layer is stacked on both front and back surfaces of a base of the optical product.

The invention according to claim 2 is **characterized in that**, in the carbon nanotube deposition layer, an amount of carbon nanotubes per unit area in each surface is from 9.93E-10 g/mm² to 3.97E-09 g/mm². Note that a numeral following the letter "E" represents a power of 10, and a numeral preceding the letter "E" is multiplied by a numeral represented by both "E" and the numeral following "E."

The invention according to claim 3 is **characterized in that** an optical multilayer film is stacked on the carbon nanotube deposition layer directly or with an intermediate layer interposed therebetween.

The invention according to claim 4 is directed to a spectacle plastic lens **characterized in that**, in the optical product according to claim 3, the base of the optical product is a base of the spectacle plastic lens, the intermediate layer is a hard coat layer, and the optical multilayer film is an antireflection film.

### Advantageous Effects of Invention

In the present invention, the use of carbon nanotubes as an antistatic agent allows an antistatic property to be provided without affecting a light transmitting property. Moreover, providing the intermediate layer and the optical multilayer film on the carbon nanotube deposition layer protects the carbon nanotube layer, whereby the antistatic property can be sustained. Furthermore, controlling the amount of carbon nanotubes per unit area in each surface allows an optical member to be provided which is provided with an excellent antistatic property without affecting its light transmitting property while maintaining a conventional level of durability.

### BRIEF DESCRIPTION OF DRAWINGS

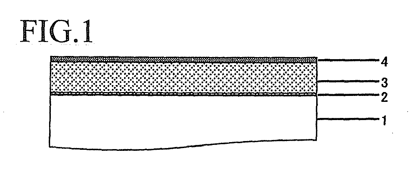

[FIG. 1] FIG. 1 is a cross-sectional view showing an example of one surface of an optical product according to the present invention.

### BEST MODES FOR CARRYING OUT THE INVENTION

Examples of an embodiment of the present invention will be described below with reference to the accompanying drawing as appropriate. The embodiment of the present invention is not limited to these examples.

As shown in FIG. 1, in an antistatic optical lens as an example of an optical product according to the present invention, a carbon nanotube deposition layer 2, an intermediate layer 3, and an optical multilayer film 4 are sequentially stacked in this order on both front and back surfaces of a lens base 1. Note that although only one surface is shown in FIG. 1, the opposite surface is formed similarly (symmetrically with respect to the center of the optical lens 1). The optical multilayer film 4 may be directly stacked on the antistatic layer 2 with no intermediate layer 3 interposed therebetween.

Optical lenses, especially spectacle plastic lenses, are statistically charged on both front and back surfaces thereof during maintenance such as wiping. Thus, providing an antistatic property on one surface is not sufficient, and it is most preferable to provide the antistatic property on both front and back surfaces.

The carbon nanotube deposition layer 2 is formed by applying a carbon nanotube dispersion to a surface of the lens base 1 and drying the applied carbon nanotube dispersion. Thus, carbon nanotubes form a network, and the antistatic property is provided. Although the type of carbon nanotubes to be used is not particularly limited, single-walled carbon nanotubes are more preferable in order to obtain high light transmittance. Surface-treated carbon nanotubes may be used, or carbon nanotubes using covalent bonds, carbon nanotubes using non-covalent bonds, etc. may be used as appropriate.

A solvent to be used for the dispersion is not particularly limited as long as carbon nanotubes can be successfully disperses therein. Examples of the solvent include water, ethanol, methanol, isopropyl alcohol, etc. Moreover, a dispersant is sometimes used in order to improve dispersibility of carbon nanotubes. Examples of the dispersant include an anionic surfactant, a cationic surfactant, a nonionic surfactant, etc.

A coating method such as spin coating, dip coating, spray coating, roll coating, or bar coating may be used as a method for applying the carbon nanotube dispersion.

The antistatic property is stably obtained if the deposition amount of carbon nanotubes is large in the carbon nanotube deposition layer 2. However, an excessive deposition amount of carbon nanotubes causes coloring and reduces light transmittance. In the carbon nanotube deposition layer 2, the amount of carbon nanotubes per unit area in each surface is controlled from 9.93E-10 g/mm² (grams per square millimeter) to 3.97E-09 g/mm². In view of the appearance, optical characteristics, and antistatic property, the amount of carbon nanotubes per unit area in each surface is preferably from 9.93E-10 g/mm² to 2.98E-09 g/mm², and more preferably from 9.93E-10 g/mm² to 1.99E-09 g/mm². The amount of carbon nanotubes varies according to the concentration of the dispersion, the coating conditions, the shape of the lens base 1, etc.

A variation in light transmittance in the case of applying the carbon nanotube deposition layer to both surfaces of the lens base 1 is controlled to be 1.0% (percent) to 4.0%. In view of the appearance and the optical characteristics, this variation in light transmittance is preferably from 1.0% to 3.0%, and more preferably from 1.0% to 2.0%. The variation in light transmittance varies according to the amount of carbon nanotubes on the lens base 1.

Examples of the optical lens include a spectacle lens, a camera lens, a projector lens, a binocular lens, a telescope lens, etc. A material of the optical lens is glass or plastic, and examples of the plastic include a polyurethane resin, an episulfide resin, a polycarbonate resin, an acrylic resin, a polyethersulfone resin, a poly-4-methylpentane-1 resin, a diethylene glycol bis(allyl carbonate)resin, etc.

For example, a hard coat layer, etc. provided over the surface of the lens base 1 corresponds to the intermediate layer 3. The hard coat layer is made of, e.g., an organosiloxane compound, other organosilicon compound, an acrylic compound, etc. The intermediate layer 3 may be a layer that is formed by a hard coat layer and a primer layer provided below the hard coat layer. In this case, the primer layer is made of, e.g., a polyurethane resin, an acrylic resin, a methacrylic resin, or an organosilicon resin.

The optical multilayer film 4 is typically formed by alternately stacking a low refractive index layer and a high refractive index layer, each made of a metal oxide, by using a vacuum deposition method, a sputtering method, etc. Examples of the optical multilayer film 4 include an antireflection film, a mirror, a half mirror, an (ND) filter, a bandpass filter, etc. As the metal oxide, silicon dioxide, for example, can be used as the low refractive index layer. Other examples of the metal oxide include titanium dioxide, zirconium dioxide, aluminum oxide, yttrium dioxide, tantalum dioxide, hafnium dioxide, etc., and these metal oxides can be used as the high refractive index layer with respect to silicon dioxide.

### Examples

Examples of the present invention and comparative examples will be described below. It should be noted that these examples are not intended to limit the scope of the present invention.

### (Variation in Light Transmittance and Amount of Carbon Nanotubes per Unit Area)

A carbon nanotube dispersion was uniformly applied to one surface of the lens base 1 so as not to scatter, and was dried to form a carbon nanotube deposition layer 2. Regarding the carbon nanotube deposition layer 2, a variation in light transmittance and the amount of carbon nanotubes per unit area were calculated to obtain the relation therebetween. For example, in the case where 0.25 ml (milliliters) of 0.0128 wt% (weight percent) of a carbon nanotube ethernol dispersion was dropped on a lens base 1 of a spectacle lens having a diameter of 75 mm, and was applied in a manner described above, the variation in light transmittance was 0.7%, and the amount of carbon nanotubes per unit area was 1.39E-09 g/mm². Note that a lens (an optical product) before a film (a layer) is applied to its surface is herein referred to as the lens base 1 (the base of the optical product), and the lens base 1 (the base of the optical product) having the film applied to its surface is herein referred to as the lens (the optical product).

### (Antistatic Property)

The surface of the lens base 1 was rubbed with nonwoven fabric (pureleaf, made by Ozu Corporation) for 10 seconds, and a charge potential at the surface was measured by a static electricity measuring apparatus (FMX-003, made by SIMCO JAPAN) immediately after the rubbing process, in an initial state, and 1 minute, 2 minutes, and 3 minutes after the initial state. As an adhesion test, the surface was rubbed for 10 seconds in a manner similar to that described above, and was placed close to steel wool powder to observe adhesion of the steel wool powder to the lens surface, thereby verifying the level of electrostatic charging. In the section of Adhesion Test, "O" represents no adhesion of the steel wool powder, and "x" represents adhesion of the steel wool powder. These evaluations were performed on each surface of the lens.

### (Measurement of Light Transmittance)

Light transmittance was measured by using a spectrophotometer (U-4100, made by Hitachi, Ltd.)

### (Constant Temperature and Humidity Test)

In Example 2, a change in performance was evaluated after Example 2 was left for 7 days in an environmental having a temperature of 60 degrees Centigrade (the same will apply hereinafter) and a humidity of 95%.

### (Formation of Carbon Nanotube Deposition Layer)

A carbon nanotube deposition layer 2 was formed by using a spin coater. A carbon nanotube ethanol dispersion (made by Meijo Nano Carbon Co., Ltd., 0.0128 wt%) was dropped onto a spectacle lens, and the spectacle lens was rotated at a rotational speed of 1,000 rpm for 30 seconds, and was dried at 60 degrees for 15 minutes to remove a solvent. The carbon nanotube deposition layer 2 was thus formed on both surfaces of the lens base 1. This spectacle lens has a refractive index of 1.6 and an Abbe number of 42 as its optical characteristics, and has a power of-2.00.

### (Formation of Hard Coat Layer)

206 g of ethanol, 300 g of methanol-dispersed titania sol (made by JGC Catalysts and Chemicals Ltd., solid: 30%), 60 g of γ-glycidoxypropyltrimethoxysilane, 30 g of γ-glycidoxypropylmethyldiethoxysilane, and 60 g of tetraethoxysilane were dropped into a reaction container, and 0.01 N (normality) of an hydrochloric acid aqueous solution was dropped into the mixture. The resultant solution was stirred and hydrolyzed. Then, 0.5 g of a flow conditioner (L-7604, made by Nippon Unicar Company Limited) and 1.0 g of a catalyst were added, and the resultant solution was stirred at room temperature for 3 hours to produce a hard coat solution. This hard coat solution was applied to the carbon nanotube deposition layer 2 by a spin coating method, was dried by air, and was heat-cured at 120 degrees for 1.5 hours to form a hard coat film (an intermediate film 3) with a thickness of 3.0 micrometers (µm).

### (Formation of Antireflection Film)

The lens base 1 having the hard coat layer was placed in a vacuum vessel, and an antireflection treatment was performed at a substrate temperature of 80 degrees by using a vacuum deposition method. An antireflection film (an optical multilayer film 4) formed by this treatment was a 5-layer film formed, from bottom to top, by a silicon dioxide layer having an optical thickness of λ/4, a zirconium dioxide layer having an optical thickness of 0.5λ/4, a silicon dioxide layer having an optical thickness of 0.2λ/4, a zirconium dioxide layer having an optical thickness of λ/4, and a silicon dioxide layer as an uppermost layer having an optical thickness of λ/4, where λ was set to 500 nm.

### (Example 1)

The carbon nanotube deposition layer, the hard coat layer, and the antireflection film were formed on both surfaces of the lens base 1. 1.00 ml of the carbon nanotube dispersion was dropped on each surface.

### (Example 2)

1.50 ml of the carbon nanotube dispersion was dropped on each surface in Example 1.

### (Example 3)

2.00 ml of the carbon nanotube dispersion was dropped on each surface in Example 1.

### (Comparative Example 1)

No carbon nanotube deposition layer was formed in Example 1.

### (Comparative Example 2)

The carbon nanotube deposition layer was formed only on the convex surface of the lens, and 1.50 ml of the carbon nanotube dispersion was dropped in Example 1.

### (Comparative Example 3)

0.50 ml of the carbon nanotube dispersion was dropped on each surface in Example 1.

### (Comparative Example 4)

2.50 ml of the carbon nanotube dispersion was dropped on each surface in Example 1.

[Tables 1] and [Table 2] below show the evaluation results of the optical lenses produced as described above. Note that kV in [Table 1] stands for kilovolt.

**[Table 1]**

| | | Example 1 | | Example2 | | Example 3 | | Comparative Example 1 | | Comparative Example 2 | | Comparative Example 3 | | Comparative Example 4 | |
|---|---|---|---|---|---|---|---|---|---|---|---|---|---|---|---|
| Coated Surface | | Both Surfaces | | Both Surfaces | | Both Surfaces | | None | | Convex Surface | | Both Surfaces | | Both Surfaces | |
| Measured Surface | | Convex Surface | Concave Surface | Convex Surface | Concave Surface | Convex Surface | Concave Surface | Convex Surface | Concave Surface | Convex Surface | Concave Surface | Convex Surface | Concave Surface | Convex Surface | Concave Surface |
| Charge Potential (kV) | Initial | 0.00 | 0.00 | 0.00 | 0.00 | 0.00 | 0.00 | 0.00 | 0.00 | 0.00 | 0.00 | 0.00 | 0.00 | 0.00 | 0.00 |
| | After Rubbing | -0.22 | -0.37 | -0.03 | -0.04 | 0.00 | 0.00 | -2.80 | -5.70 | 0.00 | -2.20 | -0.69 | -3.10 | 0.00 | 0.00 |
| | 1 min Later | 0.00 | 0.00 | 0.00 | 0.00 | 0.00 | 0.00 | -2.40 | -5.10 | 0.00 | -0.50 | -0.04 | -0.46 | 0.00 | 0.00 |
| | 3 min Later | 0.00 | 0.00 | 0.00 | 0.00 | 0.00 | 0.00 | -2.40 | -5.00 | 0.00 | -0.26 | 0.00 | -0.13 | 0.00 | 0.00 |
| | 5 min Later | 0.00 | 0.00 | 0.00 | 0.00 | 0.00 | 0.00 | -2.10 | -4.60 | 0.00 | -0.13 | 0.00 | -0.10 | 0.00 | 0.00 |
| Adhesion Test | | ○ | ○ | ○ | ○ | ○ | ○ | × | × | ○ | × | ○ | × | ○ | ○ |
| Variation in Light Transmittance (%) | | 1.89 | | 2.45 | | 3.75 | | 0.00 | | 0.95 | | 0.87 | | 4.25 | |
| Amount of Carbon Nanotubes [g/mm²] | | 1.88E-09 | | 2.43E-09 | | 3.72E-09 | | 0.00E+00 | | 1.89E-09 | | 8,64E-10 | | 4.22E-09 | |

**[Table 2]**

| | Example 2 | Comparative Example 1 |
|---|---|---|
| Adhesion Test | ○ | ○ |
| Appearance | ○ | ○ |

As shown in [Table 1], Examples 1 to 3 have an excellent antistatic property while satisfying the light transmittance, as compared to Comparative Examples 1 and 2. Comparative Example 3 does not have a sufficient antistatic property. Comparative Example 4 has an excellent antistatic property, but does not have sufficient light transmittance. As shown in Table 2, Example 2 maintained the antistatic property even after being left for 7 days in the environment having a temperature of 60 degrees and a humidity of 95%. No crack appeared in Example 2, and the appearance of Example 2 was similar to Comparative Example 1 having no carbon nanotube deposition layer 2.

### Description of the Reference Numerals

- 1: lens base (base of optical product)
- 2: carbon nanotube deposition layer
- 3: intermediate layer (hard coat layer)
- 4: optical multilayer film (antireflection film)

## Claims

1. An optical product, **characterized in that**
a carbon nanotube deposition layer is stacked on both front and back surfaces of a base of the optical product.

2. The optical product according to claim 1, **characterized in that**
in the carbon nanotube deposition layer, an amount of carbon nanotubes per unit area in each surface is from 9.93E-10 g/mm² to 3.97E-09 g/mm².

3. The optical product according to claim 1 or 2, **characterized in that**
an optical multilayer film is stacked on the carbon nanotube deposition layer directly or with an intermediate layer interposed therebetween.

4. A spectacle plastic lens, **characterized in that**
in the optical product according to claim 3, the base of the optical product is a base of the spectacle plastic lens, the intermediate layer is a hard coat layer, and the optical multilayer film is an antireflection film.
